# EUROPÄISCHE PATENTSCHRIFT

(11) **EP 1 890 905 B1**
(45) Veröffentlichungstag und Bekanntmachung des Hinweises auf die Patenterteilung: **17.11.2010**
(21) Anmeldenummer: 06805623.3
(22) Anmeldetag: 26.05.2006
(51) Int. Cl.: B60N 2/20, B60R 22/00

(54) **FAHRZEUGSITZ, INSBESONDERE SPORTSITZ**
VEHICLE SEAT IN PARTICULAR A SPORTS SEAT
SIEGE DE VOITURE, NOTAMMENT SIEGE SPORT

(30) Priorität: 11.06.2005 DE 102005027074
(43) Veröffentlichungstag der Anmeldung: 27.02.2008
(73) Patentinhaber: Recaro GmbH & Co. KG, 73230 Kirchheim/Teck (DE)
(72) Erfinder: BEERMANN, Frank, 73230 Kirchheim/Teck (DE); RITZEL, Michael, 73230 Kirchheim/Teck (DE)
(74) Vertreter: Patentanwälte Hosenthien-Held und Dr. Held
(86) Internationale Anmeldenummer: PCT/EP2006/005032
(87) Internationale Veröffentlichungsnummer: WO 2007/019900

(56) Entgegenhaltungen:
- WO-A-2004/106106
- DE-A1- 2 453 732
- DE-A1- 10 341 405

## Beschreibung

Die Erfindung betrifft einen Fahrzeugsitz, insbesondere einen Sportsitz, mit den Merkmalen des Oberbegriffs des Anspruches 1.

Bei einem durch Benutzung bekannten Fahrzeugsitz, welcher als Sportsitz für ein zweitüriges Kraftfahrzeug ausgebildet ist, sind zwei Gurtdurchführungen für einen 4-Punkt-Sicherheitsgurt vorgesehen. Um den Zugang zur zweiten Sitzreihe zu erleichtern, ist die Lehne freischwenkbar. Das Entriegeln der Lehne zum Freischwenken erfolgt durch Betätigen des seitlich angeordneten Griffes.

Die DE 103 41 405 A1 zeigt einen Fahrzeugsitz der eingangs genannten Art mit einer freischwenkbaren Lehne mit zwei Gurtdurchführungen. Die Verriegelung der Lehne ist mittels eines Elektromotors entriegelbar, zu dessen Ansteuerung ein manuell zu bedienender Schalter vorgesehen ist. Der als Griff wirkende Schalter ist auf der Vorderseite der Lehne in eine der beiden Gurtdurchführungen integriert.

In der WO 2004/106106 A1 ist ein Fahrzeugsitz beschrieben, dessen Lehne mittels eines manuell zu bedienenden Griffs zu entriegeln ist. Der seitlich an der Lehne angeordnete Griff ist innerhalb einer Griffmulde gelagert und schließt bündig mit der Seitenfläche der Lehne ab.

Die DE 24 53 732 A1 offenbart eine Betätigungsvorrichtung für eine Lehne eines Fahrzeugsitzes mit einer Griffmulde, einem am Rand der Griffmulde gelagerten Griff und Befestigungsmitteln.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Indem der Griff in die Gurtdurchführung integriert ist, verringert sich die Anzahl der Einzelteile des Fahrzeugsitzes und die Anzahl der notwendigen Durchlässe im Bezug oder in der Verblendung der Lehne. Beides verringert den Herstellungs- und Montageaufwand, so dass der Fahrzeugsitz kostengünstiger wird. Zudem wird der Bezug oder die Verblendung einem geringeren Verschleiss unterworfen und das Design des Bezuges oder der Verblendung wird weniger unterbrochen. Aufgrund des durch den Griff ausgelösten Entriegelungsvorganges kann ein Freischwenken der Lehne, gegebenenfalls auch eine Neigungseinstellung, erfolgen. Es wäre auch denkbar, dass mittels des Griffes ein Schwenken des gesamten Fahrzeugsitzes in eine Einstiegsstellung oder Packagestellung ausgelöst wird. Die Erfindung ist insbesondere für Sportsitze mit 4-Punkt-Sicherheitsgurten oder Gurtintegralsitze geeignet.

Im verriegelten Zustand der Lehne ist der Griff in einer Griffmulde angeordnet und damit aufgeräumt. Für eine einfache, leicht herzustellende Bauform weist die Gurtdurchführung einen Tunnel als Durchlass zwischen der Vorderseite und der Rückseite der Lehne auf, von dem dann weitere Bauteile insbesondere seitlich abstehen, wie die Griffmulde oder Flansche, mittels derer der Rand des Bezuges oder der Verblendung im Bereich der Gurtdurchführung verblendet werden können.

Für eine einfache Betätigung ist der Griff vorzugsweise schwenkbar (oder verschiebbar) an der Gurtdurchführung gelagert und auf Zug oder Druck beanspruchbar. Für eine leichtere Zugänglichkeit unter Ausnutzung des Tunnels ist der Griff vorzugsweise auf der vom Tunnel abgewandten Seite der Griffmulde schwenkbar gelagert. Am Griff ist vorzugsweise ein Bowdenzug oder dergleichen anbringbar, welcher an einer Einhängung oder dergleichen der Gurtdurchführung abgestützt ist und mittels welchem der Griff die Verriegelung der Lehne entriegelt.

Vorzugsweise ist die Gurtdurchführung - bis auf den Griff - einstückig (und damit einfach herstellbar) oder als eine körperliche Einheit von zusammengefügten, beispielsweise verclipsten, Teilen (und damit einfach montierbar) ausgebildet. Der Griff ist vorzugsweise dadurch aufgeräumt, dass seine nach außen gewandte Seite im verriegelten Zustand der Lehne bündig mit einem der beiden Flansche ist.

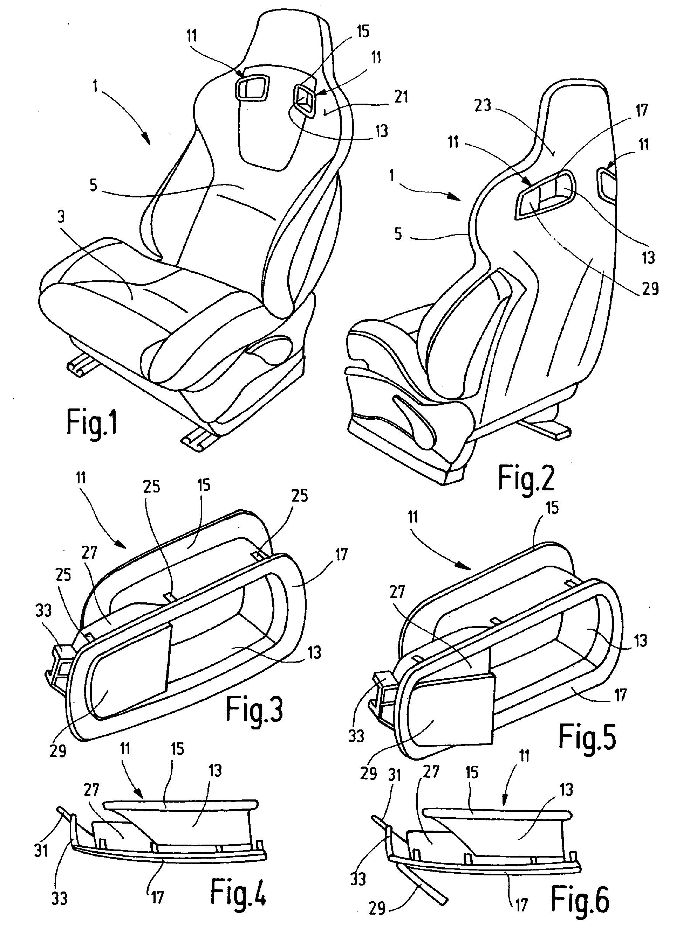

Im folgenden ist die Erfindung anhand eines in der Zeichnung dargestellten Ausführungsbeispiels näher erläutert. Es zeigen
- Fig. 1: eine perspektivische Vorderansicht des Ausführungsbeispiels,
- Fig. 2: eine perspektivische Rückansicht des Ausführungsbeispiels,
- Fig. 3: eine perspektivische Ansicht einer Gurtdurchführung im verriegelten Zu- stand,
- Fig. 4: eine Draufsicht auf die Gurtdurchführung im verriegelten Zustand,
- Fig. 5: eine perspektivische Ansicht der Gurtdurchführung im entriegelten Zustand, und
- Fig. 6: eine Draufsicht auf die Gurtdurchführung im entriegelten Zustand.

Ein als Sportsitz ausgebildeter Fahrzeugsitz 1 für ein Kraftfahrzeug weist ein Sitzteil 3 und eine Lehne 5 auf. Die Lehne 5 ist mittels Beschlägen am Sitzteil 3 angebracht, relativ zu diesem freischwenkbar, d.h. zur Erleichterung des Zugangs zur nächsten Sitzreihe nach vorne schwenkbar, und in der im wesentlichen aufrechten Gebrauchsstellung verriegelbar. Im oberen Bereich der Lehne 5 sind in zwei Aussparungen zwei Gurtdurchführungen 11 für einen 4-Punkt-Sicherheitsgurt vorgesehen. Von den beiden Gurtdurchführungen 11 ist im folgenden die näher an der Fahrzeugtüre angeordnete (schwellerseitige) Gurtdurchführung 11 beschrieben.

Die Gurtdurchführung 11 besteht aus zwei bei der Montage miteinander verclipsten Teilen, die dann eine körperliche und funktionelle Einheit bilden, welche der Beschreibung der Gurtdurchführung 11 zugrunde gelegt ist. In abgewandelter Form können diese Teile der Gurtdurchführung 11 einstückig miteinander ausgebildet sein. Die Gurtdurchführung 11 weist einen Tunnel 13 mit einem vorderen Flansch 15 und einem hinteren Flansch 17 auf. Der Tunnel 13 ist in der Lehne 5 angeordnet, womit die Gurtdurchführung 11 einen Durchlass zwischen der Rückseite der Lehne 5 und deren Vorderseite schafft. Zugleich verblendet der Tunnel 13 dabei das Innere der Lehne 5 im Bereich der Aussparung. Quer zum Tunnel 13 verläuft beispielsweise die Fügelinie der beiden Teile der Gurtdurchführung 11.

Die beiden an den Enden des Tunnels 13 vorgesehenen Flansche 15 und 17, welche integrale Bestandteile des Tunnels 13 oder als separate Bauteile mit diesem verbunden sein können, stehen seitlich vom Tunnel 13 ab und sind an den Oberflächenverlauf der Lehne 5 angepasst. Dabei übergreift der vordere Flansch 15 den Bezug 21 und der hintere Flansch 17 die Rückenschale 23 der Lehne 5. Zur Befestigung der Gurtdurchführung 11 an der Rückenschale 23 sind vorzugsweise Befestigungsmittel 25 im Bereich zwischen dem hinteren Flansch 17 und dem Tunnel 13 vorgesehen.

Vom Tunnel 13 steht seitlich eine Griffmulde 27 ab, deren ungefähr trapezförmiger Grund parallel zum hinteren Flansch 17 ausgerichtet und gegenüber diesem vertieft ist, d.h. abgesetzt ist. Drei Ränder der Griffmulde 27 sind vom Grund aus zum hinteren Flansch 17 hochgezogen. Die vierte Seite geht in den Tunnel 13 über. Innerhalb der Griffmulde 27 ist ein Griff 29 angeordnet, welcher auf der vom Tunnel 13 abgewandten Seite der Griffmulde 27 schwenkbar gelagert ist. Der Griff 29 ist also in die Gurtdurchführung 11 integriert, wobei die Gurtdurchführung 11 bis auf den Griff 29 einstückig ausgebildet ist, vorzugsweise aus Kunststoff gespritzt.

Auf der dem Grund der Griffmulde 27 zugewandten Seite des Griffs 29 ist die Seele eines Bowdenzuges 31 anbringbar, die dann den Grund der Griffmulde 27 durchdringt. Der Mantel des Bowdenzuges 31 ist an einer Einhängung 33 abgestützt, die wiederum an der Griffmulde 27 auf der vom Griff 29 abgewandten Seite angeformt ist. Das andere Ende des Bowdenzuges 31 wirkt auf die Freischwenkeinrichtungen der Beschläge ein. Normalerweise, d.h. im verriegelten Zustand der Lehne 5 bzw. deren Beschläge, liegt der Griff 29 - aufgrund von Vorspannungen im Bowdenzug 31 - innerhalb der Griffmulde 27, so dass seine vom Grund abgewandte, nach außen gewandte Seite bündig zum hinteren Flansch 17 ist.

Soll die Lehne 5 freigeschwenkt werden, d.h. zunächst entriegelt werden, so wird der Griff 29 ergriffen und aus der Griffmulde 27 geschwenkt, womit der Bowdenzug 31 gezogen und die Beschläge entriegelt werden, d.h. die Lehne entriegelt wird. Mit dem Vorschwenken der Lehne 5 kann der Griff 29 losgelassen werden. Die Lehne 5 bleibt dann entriegelt. Am Ende des Zurückschwenkens der Lehne 5 verriegeln die Beschläge wieder und der Griff 29 wird - aufgrund der genannten Vorspannungen im Bowdenzug 31 - wieder vollständig in die Griffmulde 27 gezogen.

Die tunnelseitige, zweite Gurtdurchführung 11 ist in der Regel konventionell aufgebaut, d.h. ohne Griffmulde 27 und Griff 29, kann aber auch erfindungsgemäß ausgebildet sein.

### Bezugszeichenliste

- 1: Fahrzeugsitz
- 3: Sitzteil
- 5: Lehne
- 11: Gurtdurchführung
- 13: Tunnel
- 15: vorderer Flansch
- 17: hinterer Flansch
- 21: Bezug
- 23: Rückenschale
- 25: Befestigungsmittel
- 27: Griffmulde
- 29: Griff
- 31: Bowdenzug
- 33: Einhängung

## Patentansprüche

1. Fahrzeugsitz, insbesondere Sportsitz, mit einem Sitzteil (3) und einer relativ zum Sitzteil (3) schwenkbaren und verriegelbaren Lehne (5), welche wenigstens eine Gurtdurchführung (11) für einen Sicherheitsgurt und einen in die Gurtdurchführung (11) integrierten Griff (29) zum Entriegeln der Lehne (5) aufweist, wobei die Gurtdurchführung (11) einen Tunnel (13) als Durchlass zwischen der Vorderseite und der Rückseite der Lehne (5) aufweist, **dadurch gekennzeichnet, dass** im verriegelten Zustand der Lehne (5) der Griff (29) in einer Griffmulde (27) angeordnet ist, welche auf der Rückseite der Lehne (5) vom Tunnel (13) seitlich absteht.

2. Fahrzeugsitz nach Anspruch 1, **dadurch gekennzeichnet, dass** der Griff (29) schwenkbar an der Gurtdurchführung (11) gelagert ist.

3. Fahrzeugsitz nach Anspruch 2, **dadurch gekennzeichnet, dass** der Griff (29) auf der vom Tunnel (13) abgewandten Seite der Griffmulde (27) schwenkbar gelagert ist.

4. Fahrzeugsitz nach einem der vorhergehenden Ansprüche, **dadurch gekennzeichnet, dass** am Griff (29) ein Bowdenzug (31) anbringbar ist, welcher an einer Einhängung (33) der Gurtdurchführung (11) abgestützt ist.

5. Fahrzeugsitz nach einem der vorhergehenden Ansprüche, **dadurch gekennzeichnen, dass** an den Enden des Tunnels (13) Flansche (15, 17) vorgesehen sind, welche seitlich vom Tunnel (13) abstehen.

6. Fahrzeugsitz nach Anspruch 5, **dadurch gekennzeichnet, dass** im verriegelten Zustand der Lehne (5) die nach außen gewandte Seite des Griffes (29) bündig mit einem der beiden Flansche (15, 17) ist.

7. Fahrzeugsitz nach Anspruch 6, **dadurch gekennzeichnet, dass** die Gurtdurchfiihrung (11) - bis auf den Griff (29) - einstückig oder als körperliche Einheit von zusammengefügten Teilen ausgebildet ist.

## Claims

1. A vehicle seat, in particular a sports seat, having a seat part (3) and a backrest (5) that is pivotable and lockable relative to the seat part (3), said backrest (5) having at least one belt passage (11) for a safety belt and a handle (29) for unlocking the backrest (5), said handle (29) being an integral part of the belt passage (11), wherein the belt passage (11) has a tunnel (13) acting as a passageway between the front side and the rear side of the backrest (5), **characterized in that** when the backrest (5) is in the locked state, the handle (29) is arranged in a handle recess (27) which, on the rear of the backrest, projects laterally from the tunnel (13).

2. A vehicle seat according to Claim 1, **characterized in that** the handle (29) is pivotably mounted on the belt passage (11).

3. A vehicle seat according to Claim 2, **characterized in that** the handle (29) is pivotably mounted on the side of the handle recess (27) facing away from the tunnel (13).

4. A vehicle seat according to any of the preceding Claims, **characterized in that** a Bowden cable (31) can be attached to the handle (29), said Bowden cable (31) being supported on a bracket (33) of the belt passage (11).

5. A vehicle seat according to any of the preceding Claims, **characterized in that** flanges (15, 17) are provided at the ends of the tunnel (13) which project laterally from the tunnel (13).

6. A vehicle seat according to Claim 5, **characterized in that** when the backrest (5) is in the locked state, the outward-facing side of the handle (29) is flush with one of the two flanges (15, 17).

7. A vehicle seat according to Claim 6, **characterized in that** the belt passage (11) - with the exception of the handle (29) - is formed in one piece or as a physical unit made up of fitted-together parts.

## Revendications

1. Siège de véhicule, en particulier siège de sport, avec une partie d'assise (3) et un dossier (5) qui peut pivoter et être verrouillé par rapport à la partie d'assise (3) et qui comprend au moins un passage de ceinture (11) pour une ceinture de sécurité et une poignée (29) destinée à déverrouiller le dossier (5), intégrée dans le passage de ceinture (11), dans lequel le passage de ceinture (11) comprend un tunnel (13) constituant une traversée entre la face antérieure et la face postérieure du dossier (5), **caractérisé en ce que**, dans l'état de verrouillage du dossier (5), la poignée (29) est logée dans une cuvette de poignée (27) qui est décalée latéralement par rapport au tunnel (13) sur la face postérieure du dossier (5).

2. Siège de véhicule selon la revendication 1, **caractérisé en ce que** la poignée (29) est montée pivotante sur le passage de ceinture (11).

3. Siège de véhicule selon la revendication 2, **caractérisé en ce que** la poignée (29) est montée pivotante sur le côté de la cuvette de poignée (27) qui est opposé au tunnel (13).

4. Siège de véhicule selon l'une des revendications précédentes, **caractérisé en ce qu'**il est possible d'implanter sur la poignée (29) un câble Bowden (31) qui prend appui sur un crochet (33) du passage de ceinture (11).

5. Siège de véhicule selon l'une des revendications précédentes, **caractérisé en ce qu'**il est prévu aux extrémités du tunnel (13) des brides (15, 17) qui font saillie latéralement par rapport au tunnel (13).

6. Siège de véhicule selon la revendication 5, **caractérisé en ce que**, lorsque le dossier (5) est dans son état de verrouillage, la face de la poignée (29) tournée vers l'extérieur affleure avec l'une des deux brides (15, 17).

7. Siège de véhicule selon la revendication 6, **caractérisé en ce que** le passage de ceinture (11) - hormis la poignée (29) - est fait d'une pièce ou forme une unité physique faite de pièces assemblées.
